# EUROPEAN PATENT APPLICATION

(11) **EP 3 078 533 A1**
(43) Date of publication of application: **12.10.2016**
(21) Application number: 16162984.5
(22) Date of filing: 30.03.2016
(51) Int. Cl.: B60K 15/07, B60K 15/03

(54) **APPARATUS FOR SUPPORTING A FUEL TANK**

(30) Priority: 06.04.2015 KR 20150048479
(71) Applicant: ILJIN Composites Co., Ltd., Jeollabuk-do 55322 (KR)
(72) Inventor: Heo, Seok Bong, 55135 Jeollabuk-do (BL); Choi, Bong Won, 55316 Jeollabuk-do (KR); Park, Jae Sung, 54131 Jeollabuk-do (KR)
(74) Representative: Zech, Stefan Markus

(57) **Abstract**

Apparatus for supporting a fuel tank (T), including: a fixing part (100) configured to fix a fuel tank to a vehicle body; and a protecting part (200) configured to cover the fuel tank, in which the protecting part (200) is detachably coupled to the fixing part (100). Accordingly, it is possible to protect the fuel tank from the outside, and easily check and repair the fuel tank.

## Description

### CROSS-REFERENCE TO RELATED APPLICATIONS

This application claims priority to and the benefit of Korean Patent Application No. 10-2015-0048479 filed in the Korean Intellectual Property Office on April 6, 2015, the entire contents of which are incorporated herein by reference.

### TECHNICAL FIELD

The present invention relates to an apparatus for supporting a fuel tank, and more particularly, to an apparatus for supporting a fuel tank, which is capable of fixing a fuel tank of a vehicle to a vehicle body.

### BACKGROUND ART

In general, a fuel tank supporting apparatus is an apparatus for fixing a fuel tank which supplies fuel, such as Compressed Natural Gas (CNG), to a vehicle to a vehicle body.

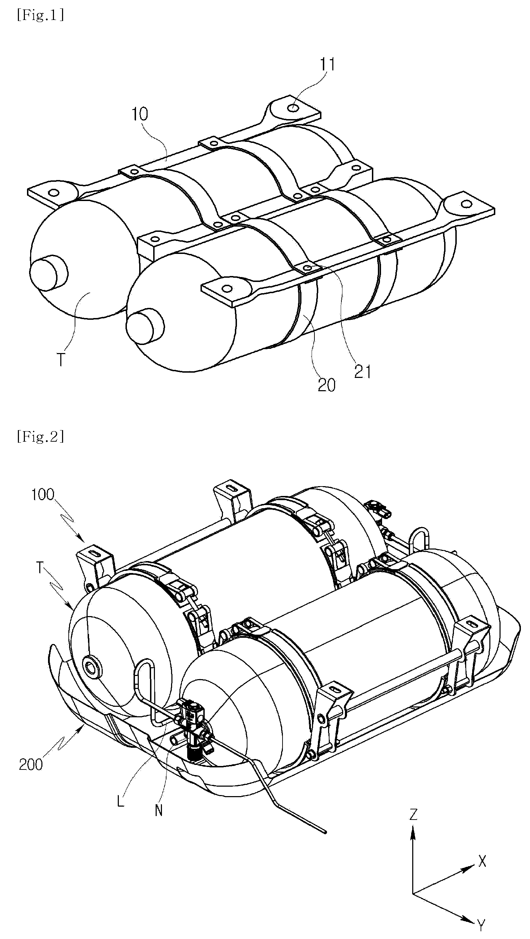

FIG. 1 is a perspective view illustrating a fuel tank supporting apparatus in the related art.

As illustrated in FIG. 1, the fuel tank T supporting apparatus in the related art includes a frame 10 fastened to a vehicle body, and a fixing member 20 fixing the fuel tank T to the frame 10.

However, in the fuel tank supporting apparatus in the related art, the fuel tank T is exposed to the outside, so that there are problems in that the fuel tank T may collide with an external object (for example, the ground and a structure) and be damaged, or may be in contact with a corrosive material (for example, water and calcium chloride) and be corroded. Accordingly, fuel leaks from the fuel tank T to cause a problem to an operation of a vehicle and fire may be generated.

In the meantime, the fuel tank T may be installed inside the vehicle body in order to protect the fuel tank T, but in this case, it is necessary to detach the fuel tank T from the vehicle body in order to check and repair the fuel tank, so that it is difficult to check and repair the fuel tank and the number of processes is increased.

### SUMMARY OF THE INVENTION

The present invention has been made in an effort to provide an apparatus for supporting a fuel tank, which is capable of protecting a fuel tank from the outside.

The present invention has also been made in an effort to provide an apparatus for supporting a fuel tank, in which it is easy to check and repair a fuel tank.

An exemplary embodiment of the present invention provides an apparatus for supporting a fuel tank, including: a fixing part configured to fix a fuel tank to a vehicle body; and a protecting part configured to cover the fuel tank, in which the protecting part is detachably coupled to the fixing part.

The fixing part may include a frame which is supported to the vehicle body and supports the fuel tank, and the frame may be provided with a protecting part fastening recess to which the protecting part is coupled.

The protecting part may be provided with an opening for checking the fuel tank.

The opening may be formed in a portion facing a nozzle of the fuel tank.

Both ends of the frame may be fastened to the vehicle body, and a center portion of the frame may cross the fuel tank in a width direction vertical to a longitudinal direction of the fuel tank at an opposite side of the vehicle body based on the fuel tank.

The fuel tank may be formed in a cylindrical shape, and a surface of the frame facing the fuel tank may be formed in a curved surface so as to correspond to an outer circumferential surface of the fuel tank.

The number of fuel tanks may be plural, the plurality of fuel tanks may be arranged in the width direction of the fuel tank, the frame may cross all of the plurality of fuel tanks, and a portion of the frame positioned between the plurality of fuel tanks may be formed to be thicker than a portion of the frame, on which the fuel tank is seated.

The portion of the frame positioned between the plurality of fuel tanks may be formed in a hollow hole.

The number of frames may be plural, and the plurality of frames may be arranged in the longitudinal direction of the fuel tank.

The plurality of frames may be connected by connecting rods extended in the longitudinal direction of the fuel tank.

The frame may be provided with a connection hole, into which the connecting rod is inserted.

The fixing part may further include a strap which fixes the fuel tank to the frame, and the strap may include: a first strap band, of which one end is hinge-coupled to one side of the frame so that the strap is in contact with and is spaced apart from the fuel tank; a second strap band, of which one end is hinge-coupled to the other side of the frame that is the opposite side of the one side of the frame based on the fuel tank so that the strap is in contact with and is spaced apart from the fuel tank; and a strap bolt screw-engaged with the other end of the first strap band and the other end of the second strap band. A gap between the other end of the first strap band and the other end of the second strap band may be adjusted by the strap bolt, so that the first strap band and the second strap band may pressurize the fuel tank toward the frame side.

The apparatus may further include strap rubber formed between the frame and the fuel tank, the first strap band and the fuel tank, and the second strap band and the fuel tank.

The strap rubber may be provided with a slip preventing recess on a contact surface with the fuel tank.

The apparatus for supporting the fuel tank according to the present invention may include the protecting part covering the fuel tank, thereby protecting the fuel tank from the outside. Accordingly, it is possible to prevent the fuel tank from colliding with an external object and being damaged, prevent the fuel tank from being in contact with a corrosive material and being corroded, and prevent fuel from leaking from the fuel tank and prevent a problem in an operation of the vehicle and fire generation.

Further, the apparatus for supporting the fuel tank according to the present invention may include the protecting part, which is detachable from the fixing part, so that only the protecting part may be detached from the fixing part in a state where the fuel tank is supported to the vehicle body by the fixing part, thereby easily checking and repairing the fuel tank. Further, the apparatus for supporting the fuel tank according to the present invention includes the opening at the protecting part, so that it is possible to check the fuel tank even in a state where the protecting part is not detached, thereby more easily checking the fuel tank.

### BRIEF DESCRIPTION OF THE DRAWINGS

FIG. 1 is a perspective view illustrating a fuel tank supporting apparatus in the related art.
FIG. 2 is a perspective view illustrating an apparatus for supporting a fuel tank according to an exemplary embodiment of the present invention.
FIG. 3 is an exploded perspective view of FIG. 2.
FIG. 4 is a perspective view illustrating a frame and a connecting rod of FIG. 3.
FIG. 5 is a perspective view of FIG. 4 viewed at the other side.
FIG. 6 is a front view illustrating a state where the apparatus for supporting the fuel tank of FIG. 2 is fastened to a vehicle body.
FIG. 7 is a front view illustrating a state where the apparatus for supporting the fuel tank of FIG. 2 is fastened to another vehicle body.

### DETAILED DESCRIPTION

Hereinafter, an apparatus for supporting a fuel tank according to the present invention will be described in detail with reference to the accompanying drawings.

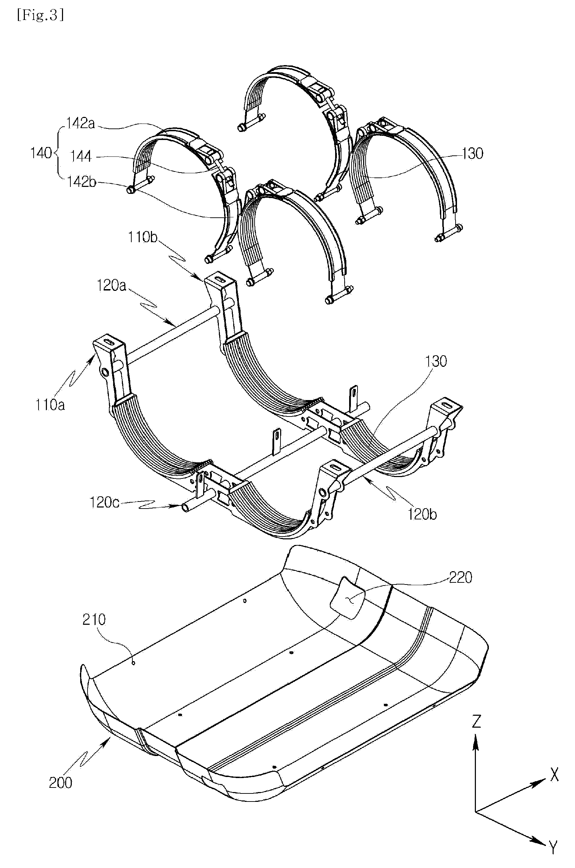

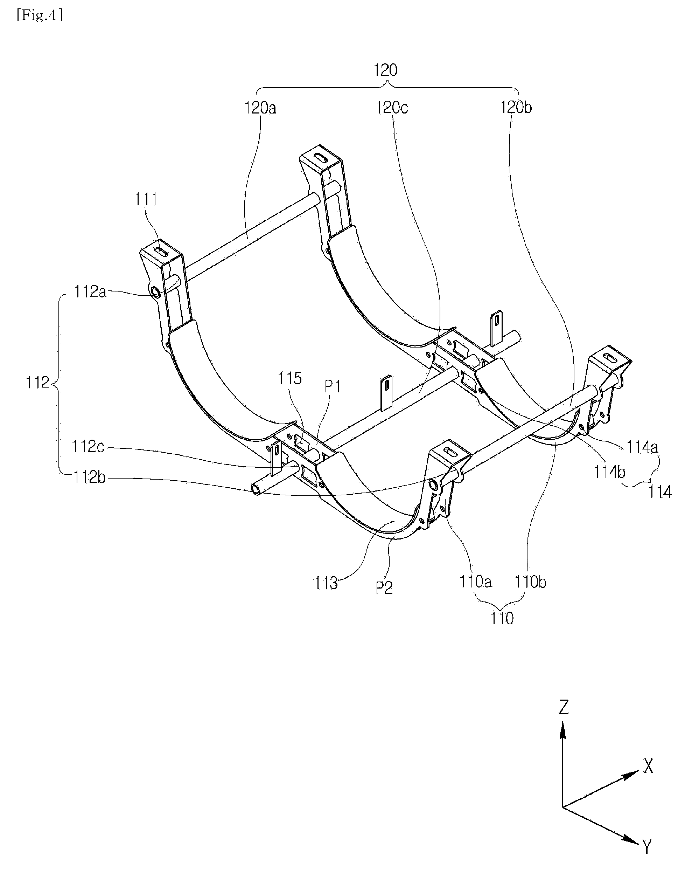

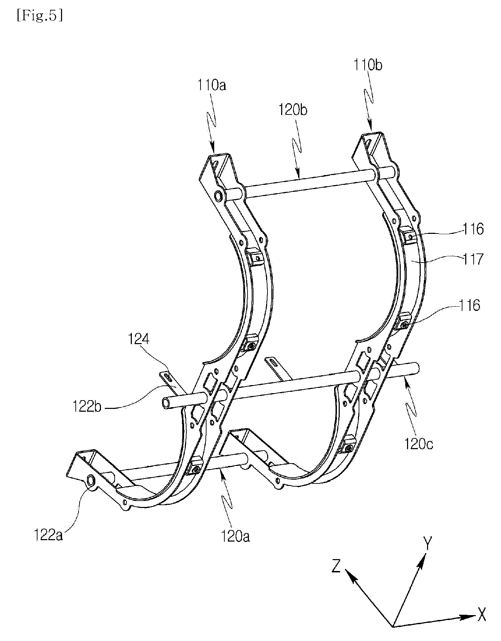

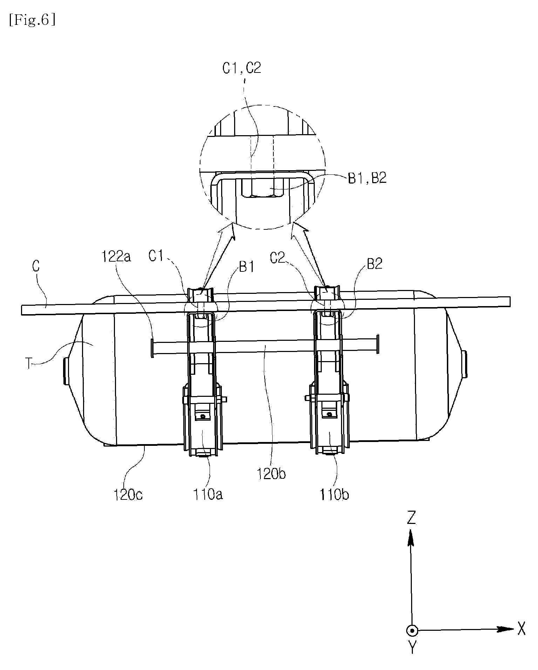

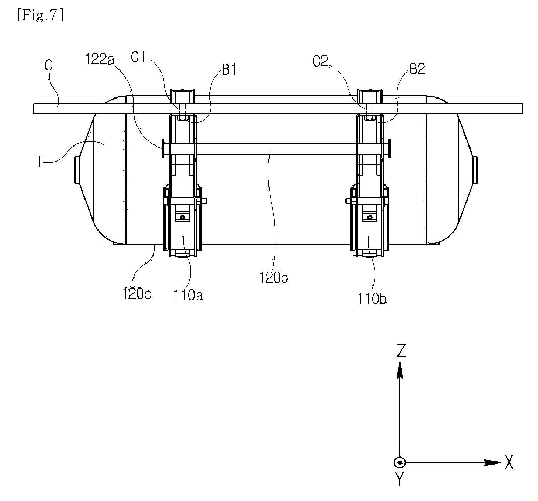

FIG. 2 is a perspective view illustrating an apparatus for supporting a fuel tank according to an exemplary embodiment of the present invention, FIG. 3 is an exploded perspective view of FIG. 2, in which the fuel tank is not illustrated, FIG. 4 is a perspective view illustrating a frame and a connecting rod of FIG. 3, FIG. 5 is a perspective view of FIG. 4 viewed at the other side, and FIG. 6 is a front view illustrating a state where the apparatus for supporting the fuel tank of FIG. 2 is fastened to a vehicle body. in the meantime, FIG. 7 is a front view illustrating a state where the apparatus for supporting the fuel tank of FIG. 2 is fastened to another vehicle body.

As illustrated in the drawings, an apparatus for supporting a fuel tank T according to an exemplary embodiment of the present invention may include a fixing part 100 fixing the fuel tank T to a vehicle body C, and a protecting part 200 covering the fuel tank T.

The fixing part 100 may include a frame 110 which is supported to the vehicle body C and supports the fuel tank T, and a strap 140 which fixes the fuel tank T to the frame 110.

The frame 110 may include a first frame 110a and a second frame 110b, which are spaced apart from each other and support the fuel tank T.

The first frame 110a may be provided so that each of both ends of the first frame 110a is fastened to the vehicle body C, and a center portion thereof crosses the fuel tank T in a width direction, which is vertical to a longitudinal direction of the fuel tank T, at an opposite side of the vehicle body C based on the fuel tank T and supports the fuel tank T. That is, when the fuel tank T is formed in a cylindrical shape, the first frame 110a may cross the fuel tank T in a predetermined radius direction of the fuel tank T. Here, the predetermined radius direction of the cylindrical fuel tank T is a width direction of the fuel tank T. Hereinafter, the longitudinal direction of the fuel tank T will be referred to as an X-axis direction, the width direction of the fuel tank T will be referred to as a Y-axis direction, and a height direction of the fuel tank T vertical to the longitudinal direction and the width direction of the fuel tank T will be referred to as a Z-axis direction.

A mount hole 111 for fixing the first frame 110a to the vehicle body C may be formed at each of both ends of the first frame 110a. Here, the first frame 110a may be supported to the vehicle body C by frame-vehicle body fastening bolts B1 which pass through the mount holes 111 and fastened to frame fastening recesses C1 and C2 of the vehicle body C.

An inner diameter of the mount hole 111 may be formed to be larger than an outer diameter of a screw of the frame-vehicle body fastening bolt B1 and may be smaller than a diagonal distance of a screw head of the frame-vehicle body fastening bolt B1 so that a position of the first frame 110a may be adjusted with respect to the vehicle body C.

Further, a connection hole 112, through which a connecting rod 120 to be described below passes, may be formed at each of both ends of the first frame 110a. That is, a first connection hole 112a, through which a first connecting rod 120a to be described below passes, may be formed at one end of the first frame 110a, and a second connection hole 112b, through which a second connecting rod 120b to be described below passes, may be formed at the other end of the first frame 110a.

The first connection hole 112a passes through in the X-axis direction so that the first frame 110a is movable with respect to the first connecting rod 120a, and may be formed to have a predetermined gap with the first connecting rod 120a. Here, the predetermined gap may be set as about zero (0) so that the first connecting rod 120a is movable with respect to the first connection hole 112a and also closely contacts the first connection hole 112a. That is, when each of the first connecting rod 120a and the first connection hole 112a is formed in a cylindrical shape having a circular cross-section, an inner diameter of the first connection hole 112a may be the same as an outer diameter of the first connecting rod 120a. Here, a noise and vibration preventing member (not illustrated), which prevents noise and vibrations generated due to a collision of the first connecting rod 120a with the first connection hole 112a, may be provided on an inner circumferential surface 113 of the first connection hole 112a.

The second connection hole 112b may be formed by the same principle as that of the first connection hole 112a so that the first frame 110a is movable with respect to the second connecting rod 120b in the X-axis direction.

An inner circumferential surface 113 of the first connection hole 112a facing the fuel tank T may be formed at the center portion of the first frame 110a so as to correspond to an outer circumferential surface of the fuel tank T. That is, when the fuel tank T is formed in a cylindrical shape, the inner circumferential surface 113 of the first frame 110a may be formed in a curved surface bent in a circular arc shape in a circumferential direction of the fuel tank T.

Strap rubber 130 which prevents the fuel tank T from being in contact with the first frame 110a and damaged, prevents noise and vibration from being generated, and prevents the fuel tank T from slipping, may be interposed between the inner circumferential surface 113 of the first frame 110a and the fuel tank T. The strap rubber 130 may be formed of an elastically transformable material so that the strap rubber 130 is pressed and transformed between the fuel tank T and the first frame 110a and thus the fuel tank T may change a posture thereof with respect to the first frame 110a. Further, the strap rubber 130 may be provided with slip preventing recesses 132 on an inner circumferential surface of the strap rubber 130 so as to more effectively prevent the fuel tank T from slipping. The slip preventing recesses 132 may be extended in the circumferential direction of the fuel tank T, be provided in plural, and be arranged in the X-axis direction. Here, the extension direction and the arrangement direction of the slip preventing recess 132 may be appropriately adjusted.

Further, hinge coupling recesses 114a and 114b for rotatably hinge-coupling the strap 140 to the first frame 110a based on the X-axis may be formed at the center portion of the first frame 110a. One pair of hinge coupling recesses 114a and 114b is formed for one fuel tank T, and the hinge coupling recesses 114a and 114b of one pair may be formed at opposite sides based on the fuel tank T.

Here, two fuel tanks T may be provided, and the two fuel tanks T may be arranged in the Y-axis direction, and the first frame 110a may cross both the two fuel tanks T and support the two fuel tanks T. Accordingly, the number of inner circumferential surfaces 113 of the first frame 110a formed in the curved surfaces, the number of strap rubber 130 provided on the inner circumferential surface 113 of the first frame 110a, the number of pairs of hinge recesses 114a and 114b formed at both sides of the inner circumferential surfaces 113 of the first frame 110a may be two. Further, a portion P1 of the first frame 110a positioned between the two fuel tanks T may be formed to be thicker than a portion P2, on which the fuel tank T is seated, so as to prevent the first frame 110a from being dropped due to an increase in weight according to an increase in the number of fuel tanks T. As a matter of course, the first frame 110a may be formed to be generally thick in order to prevent the first frame 110a from being dropped, but in this case, weight and material cost are increased, so that like the present exemplary embodiment, the first frame 110a may be formed to be generally thin, and the portion P1 of the first frame 110a positioned between the two fuel tanks T may be formed to be thicker than the both-side portions P2 of the portion P1. Further, a hollow hole 115 may be formed at the thick portion P1 (the portion positioned between the two fuel tanks T) in order to further decrease weight and material cost.

Further, a third connection hole 112c, through which a third connecting rod 120c to be described below passes, may be formed at the center portion of the first frame 110a. The third connection hole 112c may be formed by the same principle as that of the first connection hole 112a so that the first frame 110a is movable with respect to the third connecting rod 120c in the X-axis direction. In the case of the present exemplary embodiment, the two fuel tanks T are provided, and the portion P1 of the first frame 110a between the two fuel tanks T is formed to be thicker than the both-side portions P2 of the portion P1, so that it is easy to form the third connection hole 112c in the portion P1 of the first frame 110a between the two fuel tanks T.

Further, a protecting part fastening recess 116, to which a protecting part-frame fastening bolt (not illustrated) passing through the protecting part 200 is fastened, may be formed at the center portion of the first frame 110a. The protecting part fastening recess 116 may be formed on the outer circumferential surface 117 of the first frame 110a positioned at the opposite side of the fuel tank T based on the inner circumferential surface 113 of the first frame 110a, and the plurality of protecting part fastening recesses 116 may be formed so that the protecting part 200 may be stably fastened.

The second frame 110b may be identically formed to the first frame 110a, and may support the fuel tank T while being spaced apart from the first frame 110a in the Y-axis direction and may be fastened to the vehicle body C.

The first frame 110a and the second frame 110b may be connected with each other by the connecting rod 120 in order to easily align the first frame 110a and the second frame 110b and improve support strength supporting the fuel tank T.

The connecting rod 120 may be formed in a rod extended in a predetermined direction.

Further, when a gap between a frame fastening recess (hereinafter, a first frame fastening recess C1), to which the first frame 110a is fastened, in the vehicle body C and a frame fastening recess (hereinafter, a second frame fastening recess C2), to which the second frame 110b is fastened, is larger than a predetermined gap, the connecting rod 120 may be formed to be longer than the predetermined gap in order to increase a gap between the first frame 110a and the second frame 110b so as to correspond to the gap.

Further, the plurality of connecting rods 120 may be provided in order to more easily align the first frame 110a and the second frame 110b and further improve support strength. That is, the connecting rods 120 may include the first connecting rod 120a inserted into the first connection hole 112a of the first frame 110a and the first connection hole 112a of the second frame 110b, the second connecting rod 120b inserted into the second connection hole 112b of the first frame 110a and the second connection hole 112b of the second frame 110b, and the third connecting rod 120c inserted into the third connection hole 112c of the first frame 110a and the third connection hole 112c of the second frame 110b. In this case, the first connecting rod 120a, the second connecting rod 120b, and the third connecting rod 120c may be arranged in parallel to each other.

Separation preventing parts 122a and 122b, which prevent the connecting rod 120 from being separated from the first frame 110a and the second frame 110b, may be provided at the connecting rod 120. The separation preventing parts 122a and 122b may protrude from an outer peripheral surface of the connecting rod 120. Further, the separation preventing parts 122a and 122b may be provided at the end of the connecting rod 120 or between the first frame 110a and the second frame 110b. That is, in the case of the first connecting rod 120a and the second connecting rod 120b, the separation preventing part 122a may be provided at both ends of the connecting rod 120. By contrast, in the case of the third connecting rod 120c, the separation preventing part 122b may be provided at the both ends of the connecting rod 120 and between the first frame 110a and the second frame 110b. Here, the separation preventing part 122a provided between the first connecting rod 120a and the second connecting rod 120b performs an inherent function (a separation preventing function), but the separation preventing part 122b provided at the third connecting rod 120c may also perform a function of fixing a fuel line L extended from the fuel tank T as well as the inherent function (the separation preventing function). Accordingly, a fuel line accommodating recess 124, in which the fuel line L is accommodated, is formed at the separation preventing part 122b provided at the third connecting rod 120c, and the fuel line accommodating recess 124 may be provided at the both ends of the third connecting rod 120c and between the first frame 110a and the second frame 110b in order to stably fix the fuel line L. In the meantime, the separation preventing parts 122a and 122b may be detachably provided at the connecting rods 120 so that the connecting rods 120 may pass through the first frame 110a and the second frame 110b.

The strap 140 may include a first strap band 142a, of which one end is coupled with any one of the hinge coupling recesses 114a and 114b of one pair of the frame 110, so as to be in contact with and be spaced apart from the fuel tank T, a second strap band 142b, of which one end is coupled with the other of the hinge coupling recesses 114a and 114b of the pair of the frame 110, so as to be in contact with and be spaced apart from the fuel tank T, and a strap bolt 144 screw-engaged with the other end of the first strap band 142 and the other end of the second strap band 142b.

Each of the first strap band 142a and the second strap band 142b may be formed in a shape corresponding to the fuel tank T. That is, when the fuel tank T is formed in a cylindrical shape, each of the first strap band 142a and the second strap band 142b may be formed in a circular arc shape.

Here, in the strap 140, a gap between the other end of the first strap band 142a and the other end of the second strap band 142b may be adjusted by the strap bolt 144, so that the first strap band 142a and the second strap band 142b may pressurize the fuel tank T to the first frame 110a. That is, the first frame 110a, the first strap band 142a, and the second strap band 142b tighten the fuel tank T by a rotation of the strap bolt 144 in a state of surrounding the outer circumferential portion of the fuel tank T, so that the fuel tank T may be stably fixed to the first frame 110a. Further, even though an outer diameter of the fuel tank T is changed, a spaced distance between the other end of the first strap band 142a and the other end of the second strap band 142b is adjusted by the strap bolt 144, so that the fuel tank T may be stably fixed to the first frame 110a.

Further, the strap rubber 130 may be interposed between the first strap band 142a and the fuel tank T and between the second strap band 142b and the fuel tank T, similar to between the frame 110 and the fuel tank T. The strap rubber 130 interposed between the strap 140 and the fuel tank T may be formed by the same principle as that of the strap rubber 130 interposed between the frame 110 and the fuel tank T.

In the meantime, the straps 140 may be provided in the number corresponding to the number of fuel tanks T. That is, when the two fuel tanks T are provided, the two straps 140 may be provided at the first frame 110a, and the two straps 140 may be provided at the second frame 110b.

The protecting part 200 may be approximately formed in a shield shape, and may be formed to have a size covering the fuel tank T when being fastened to the frame 110.

Further, a through-hole 210, through which the protecting part-frame fastening bolt (not illustrated) passes, may be formed at the protecting part 200. The through-hole 210 may be formed in such a manner that a position of the protecting part 200 may be adjusted with respect to the frame 110. That is, in order for a position of the protecting part-frame fastening bolt (not illustrated) passing through the through-hole 210 to be adjusted within a range of the through-hole 210 and be fastened to the protecting part fastening recess 116 even though a position of the protecting part fastening recess 116 is changed by tolerance, an inner diameter of the through-hole 210 may be formed to be larger than the outer diameter of the screw of the protecting part-frame fastening bolt (not illustrated) and be smaller than a diagonal distance of the screw head of the protecting part-frame fastening bolt (not illustrated). Further, the plurality of through-holes 210 may be formed so as to be supported to the frame 110 at a plurality of points and be stably fastened to the frame 110.

Further, an opening 220, which checks the fuel tank T and checks fuel leakage and the like in a state where the protecting part 200 covers the fuel tank T even without being separated from the frame 110, may be formed at the protecting part 200. The opening 220 may be formed to communicate the space at the opposite side of the fuel tank T based on the protecting part 200 and the space at the side of the fuel tank T when the protecting part 200 covers the fuel tank T. In this case, the opening 220 may be formed in a minimum size within a range, in which the fuel tank T may be checked, in order to minimize an area of the fuel tank T to be exposed to the outside through the opening 220. Further, although not separately illustrated, a separate cover (not illustrated) covering the opening 220 may also be provided. In the meantime, the opening 220 may be formed in a portion facing the portion of a nozzle N of the fuel tank T in order to frequently check the portion of the nozzle N of the fuel tank T of which safety is important. In a case of the present exemplary embodiment, the two fuel tanks T may be provided, and two openings 220 formed to face the portions of the nozzles Z may be formed so as to correspond to the two fuel tanks T. Further, in the two fuel tanks T, in order to prevent the portions of the nozzles N from being concentrated to one side, one fuel tank T is provided to head an opposite direction of the other fuel tank T (the nozzle N of one fuel tank T heads in a + X-axis direction, and the nozzle N of the other fuel tank T heads in a - X-axis direction), and thus the two openings 220 may be provided at the opposite sides based on the fuel tank T.

Hereinafter, an operation effect of the apparatus for supporting the fuel tank T of the present exemplary embodiment will be described.

First, the frame 110 may move in the X-axis direction with respect to the connecting rod 120 so as to correspond to the shape of the vehicle body C (more accurately, the positions of the frame fastening recesses C1 and C2), so that a gap between the first frame 110a and the second frame 110b may be adjusted, and then the frame 110 may be fastened to the vehicle body C.

Further, in a state where the frame 110 is fastened to the vehicle body C, the fuel tank T may be inserted between the vehicle body C and the frame 110 and may be seated on the frame 110.

Further, the first strap 140 and the second strap 140 are retracted and the strap bolt 144 is rotated in a state where the fuel tank T is seated on the frame 110, so that the fuel tank T may be fixed to the frame 110. That is, the fuel tank T may be surrounded and tightened by the frame 110 and the strap 140 and may be fixed to the frame 110.

Further, in a state where the fuel tank T is fixed to the frame 110, the protecting part 200 may be fastened to the frame 110 to cover the fuel tank T.

Here, the apparatus for supporting the fuel tank T of the present exemplary embodiment may include the protecting part 200 covering the fuel tank T and protect the fuel tank T from the outside. Accordingly, it is possible to prevent the fuel tank T from colliding with an external object and being damaged, prevent the fuel tank T from being in contact with a corrosive material and being corroded, and prevent fuel from leaking from the fuel tank T and prevent a problem in an operation of the vehicle and fire generation.

Further, the protecting part 200 is detachably provided at the fixing part 100 (more accurately, the frame 110), so that only the protecting part 200 is detached from the fixing part 100 in a state where the fuel tank T is supported to the vehicle body C by the fixing part 100, thereby easily checking and repairing the fuel tank T. Further, the opening 220 is provide at the protecting part 200, so that it is possible to check the fuel tank T even in a state where the protecting part 200 is not detached by providing the opening 220 at the protecting part 200, thereby more easily checking the fuel tank T.

Further, in the apparatus for supporting the fuel tank T of the present exemplary embodiment, the position of the frame 110 may be precisely adjusted with respect to the protecting part 200 by forming an inner diameter of the through-hole 210 to be larger than an outer diameter of the screw of the protecting part-frame fastening bolt (not illustrated), so that the protecting part 200 may be easily fastened to the frame 110.

In the meantime, in the apparatus for supporting the fuel tank T of the present exemplary embodiment, a gap between the first frame 110a and the second frame 110b is adjusted by movably connecting the first frame 110a and the second frame 110b to the connecting rod 120 in the X-axis direction, so that the frame may be fastened to the vehicle body C even if a spaced distance between the frame fastening recesses C1 and C2 of the vehicle body C in the X-axis direction is changed by tolerance or a change in a vehicle body. Accordingly, it is possible to solve a problem in that it is necessary to provide a new apparatus for supporting the fuel tank T corresponding to the changed frame fastening recesses C1 and C2. More particularly, as illustrated in FIG. 7, when the spaced distance between the first frame fastening recess C1 and the second frame fastening recess C2 in the X-axis direction is larger than the spaced distance between the first frame fastening recess C1 and the second frame fastening recess C2 in the X-axis direction illustrated in FIG. 6, the first frame 110a and the second frame 110b may be adjusted in the X-axis direction and may be fastened to the vehicle body C. Here, the gap between the first frame 110a and the second frame 110b in the X-axis direction may also be adjusted in accordance with a length of the fuel tank T. In this case, it is a matter of course that the spaced distance between the first frame fastening recess C1 and the second frame fastening recess C2 may be formed so as to correspond to the length of the fuel tank T. Accordingly, even though the length of the fuel tank T is changed, it is possible to stably support the fuel tank T by appropriately adjusting the gap between the first frame 110a and the second frame 110b.

Further, in the apparatus for supporting the fuel tank T of the present exemplary embodiment, the position of the frame 110 may be precisely adjusted with respect to the vehicle body C by forming an inner diameter of the mount hole to be larger than the outer diameter of the screw of the frame-vehicle body fastening bolt B1, so that the frame 110 may be easily fastened to the vehicle body C.

In the meantime, in the present exemplary embodiment, the two frames 110 are provided, but in order to decrease manufacturing cost, one frame may be provided and the one frame 110 may be formed to be thick in the X-axis direction enough to stably support the fuel tank T. Otherwise, in order to more stably support the fuel tank T, three or more frames 110 may be provided.

Further, in the present exemplary embodiment, the two fuel tanks T are provided, but one or three or more fuel tanks T may be provided. In this case, the frames 110, the straps 140, and the connecting rods 120 may be provided in the number corresponding to the number of fuel tanks T.

Further, in the present exemplary embodiment, the fuel tank T may be formed in a cylindrical shape, but may also be formed in another shape, such as a rectangular shape. In this case, the inner circumferential surface 113 of the frame 110 and the strap 140 may be formed to correspond to the shape of the fuel tank T.

Further, in the present exemplary embodiment, the connecting rod 120 and the connecting holes 112, into which the connecting rod 120 is inserted, are formed in cylindrical shapes, but the connecting rod 120 may be formed in a rod having a non-circular cross-section, and the connecting holes 112 may be formed in a shape corresponding to the connecting rod 120.

Further, in the present exemplary embodiment, the mount hole 111 of the frame 110 is elongated in the Y-axis direction so that the amount, by which the frame 110 is adjustable with respect to the vehicle body C in the Y-axis direction, is increased, but the mount hole 111 of the frame 110 may be elongated in the X-axis direction so that the amount, by which the frame 110 is adjustable with respect to the vehicle body C in the X-axis direction, is increased, and the mount hole 111 may be formed to have a circular shape having a larger inner diameter than the outer diameter of the screw of the frame-vehicle body fastening bolt B1 so that the amount, by which the frame 110 is adjustable with respect to the vehicle body C in the X-axis and Y-axis directions, is increased.

Further, in a case of the present exemplary embodiment, the through-hole 210 of the protecting part 200 is formed in a circular shape, but may be formed in a hole elongated in a predetermined direction.

Further, in a case of the present exemplary embodiment, in the apparatus for supporting the fuel tank T, the frame 110 is fastened to the vehicle body C, the fuel tank T is seated on the frame 110, the strap 140 fixes the fuel tank T to the frame 110, and the protecting part 200 is fastened to the frame 110, but the fastening method may be appropriately adjusted. For example, after the fuel tank T is pre-fastened to the frame 110 and the strap 140, the frame 110 may be fastened to the vehicle body C by appropriately adjusting the gap of the frames 110 to correspond to the vehicle body C. Next, the fuel tank T may be properly fastened to the frame 110 by tightening the strap 140 and the protecting part 200 may be fastened to the frame 110.

## Claims

1. An apparatus for supporting a fuel tank, comprising:
a fixing part configured to fix a fuel tank to a vehicle body; and
a protecting part configured to cover the fuel tank,
wherein the protecting part is detachably coupled to the fixing part.

2. The apparatus of claim 1, wherein the fixing part includes a frame which is supported to the vehicle body and supports the fuel tank, and
the frame is provided with a protecting part fastening recess to which the protecting part is coupled.

3. The apparatus of claim 1, wherein the protecting part is provided with an opening for checking the fuel tank.

4. The apparatus of claim 3, wherein the opening is formed in a portion facing a nozzle of the fuel tank.

5. The apparatus of claim 2, wherein both ends of the frame are fastened to the vehicle body, and
a center portion of the frame crosses the fuel tank in a width direction vertical to a longitudinal direction of the fuel tank at an opposite side of the vehicle body based on the fuel tank.

6. The apparatus of claim 5, wherein the fuel tank is formed in a cylindrical shape, and
a surface of the frame facing the fuel tank is formed in a curved surface so as to correspond to an outer circumferential surface of the fuel tank.

7. The apparatus of claim 5, wherein the number of fuel tanks provided is two or more,
the plurality of fuel tanks is arranged in the width direction of the fuel tank,
the frame crosses all of the plurality of fuel tanks, and
a portion of the frame positioned between the plurality of fuel tanks is formed to be thicker than a portion of the frame, on which the fuel tank is seated.

8. The apparatus of claim 7, wherein the portion of the frame positioned between the plurality of fuel tanks is formed in a hollow hole.

9. The apparatus of claim 5, wherein the number of frames provided is two or more, and
the plurality of frames is arranged in the longitudinal direction of the fuel tank.

10. The apparatus of claim 9, wherein the plurality of frames is connected by connecting rods extended in the longitudinal direction of the fuel tank.

11. The apparatus of claim 10, wherein the frame is provided with a connection hole, into which the connecting rod is inserted.

12. The apparatus of claim 2, wherein the fixing part further includes a strap which fixes the fuel tank to the frame, and
the strap includes:
a first strap band, of which one end is hinge-coupled to one side of the frame so that the strap is in contact with and is spaced apart from the fuel tank;
a second strap band, of which one end is hinge-coupled to the other side of the frame that is the opposite side of the one side of the frame based on the fuel tank so that the strap is in contact with and is spaced apart from the fuel tank; and
a strap bolt screw-engaged with the other end of the first strap band and the other end of the second strap band, and
a gap between the other end of the first strap band and the other end of the second strap band is adjusted by the strap bolt, so that the first strap band and the second strap band pressurize the fuel tank toward the frame side.

13. The apparatus of claim 12, further comprising:
strap rubber formed between the frame and the fuel tank, the first strap band and the fuel tank, and the second strap band and the fuel tank.

14. The apparatus of claim 13, wherein the strap rubber is provided with a slip preventing recess on a contact surface with the fuel tank.
